# EUROPEAN PATENT APPLICATION

(11) **EP 4 574 274 A1**
(43) Date of publication of application: **25.06.2025**
(21) Application number: 23951680.0
(22) Date of filing: 26.09.2023
(51) Int. Cl.: B05C 11/00, B05C 5/00

(54) **METHOD FOR CONTROLLING GLUING OF WORKPIECE AND GLUING SYSTEM**

(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: The designation of the inventor has not yet been filed
(74) Representative: Ran, Handong
(86) International application number: PCT/CN2023/121687
(87) International publication number: WO 2025/065260

(57) **Abstract**

A method for controlling gluing is provided, including: invoking a gluing solution for the to-be-glued workpiece; instructing a gluing robot to perform a gluing operation on the workpiece based on the gluing solution.

## Description

### TECHNICAL FIELD

This application relates to the gluing of workpieces.

### BACKGROUND

A gluing operation refers to an operation of applying glue to a workpiece. For example, in an automatic assembly process of a traction battery pack, it is necessary to glue the workpiece. The gluing operation is intended, for example, to fix the traction battery pack into the workpiece such as a box body.

### SUMMARY

This application provides a method for controlling gluing and a gluing system.

According to a first aspect, this application provides a method for controlling a gluing operation of a workpiece, including: allowing a conveying apparatus to move a to-be-glued workpiece to a gluing workstation; determining a gluing mode of the to-be-glued workpiece based on a user instruction received through a human-machine interface; fixing the to-be-glued workpiece into a position; invoking a gluing solution for the to-be-glued workpiece; instructing a gluing robot to perform a gluing operation on the workpiece based on the gluing solution; and uploading gluing data to a device manufacturing execution system server.

The solution in this application can be used to improve the efficiency and automation degree of gluing work.

In some embodiments, the method for controlling gluing is applied to a control device at the gluing workstation.

In some embodiments, the invoking a gluing solution for the to-be-glued workpiece includes: instructing a camera system to identify a model of the workpiece; and obtaining, based on the identified model of the workpiece, the gluing solution for the model of the workpiece from a memory of the control device at the gluing workstation or from the device server.

In some embodiments, a manufacturing execution system (MES) is installed in the device server to constitute a device MES server.

In some embodiments, the instructing a gluing robot to perform a gluing operation on the workpiece based on the gluing solution includes: informing, of the gluing robot, information including at least one of an ingredient ratio of the glue, a shape and width of a gluing track and an amount of glue to be applied per unit area of the gluing track.

In some embodiments, the control device at the gluing workstation instructs the camera system to identify the model of the workpiece.

The control device at the gluing workstation obtains, based on the identified model of the workpiece, the gluing solution for the model of the workpiece from a memory of the control device at the gluing workstation or from the device MES server.

When identifying the model and position of the workpiece, the camera system can adapt to workpieces of different types, sizes and heights.

In some embodiments, the control device at the gluing workstation determines, in response to a request of the conveying apparatus, whether to allow the conveying apparatus to move the to-be-glued workpiece to the gluing workstation, where the conveying apparatus includes: a workpiece supporting component, configured to support the workpiece and fix the workpiece onto the workpiece supporting component; and a movement component, configured to move the workpiece supporting component.

In some embodiments, the control device at the gluing workstation instructs a positioning apparatus to fix a workpiece supporting component at the gluing workstation into a position.

In some embodiments, the control device at the gluing workstation instructs a camera system to identify a position into which the workpiece is to be fixed; and the control device at the gluing workstation instructs a positioning apparatus to fix the workpiece into the position into which the workpiece is to be fixed by fixing the workpiece supporting component into the position.

The workpiece is fixed into the position into which the workpiece is to be fixed by fixing the workpiece supporting component into the position, which facilitates the operation, without a need to arrange a hole for inserting the positioning bolt in the workpiece.

In some embodiments, the gluing solution for the workpiece and the model of the workpiece are correspondingly prestored in the memory of the control device at the gluing workstation, or the gluing solution for the workpiece and the model of the workpiece are correspondingly prestored in the device MES server.

The gluing solution for the workpiece and the model of the workpiece are correspondingly prestored, which facilitates obtaining of the gluing solution.

In some embodiments, the gluing solution for the workpiece and the model of the workpiece are correspondingly prestored in the device MES server, and obtaining the gluing solution for the model of the workpiece from the device MES server includes: requesting the gluing solution for the workpiece from the device MES server and receiving the gluing solution for the workpiece from the device MES server.

The gluing solution for the workpiece and the model of the workpiece are correspondingly prestored in the device MES server, which facilitates data security and a distribution operation of the device MES server to each workstation control device.

In some embodiments, the control device at the gluing workstation instructs the gluing robot to discharge a glue sample into a glue sample box for inspection based on the predetermined plan of the scheduled glue inspection.

The scheduled glue inspection can ensure that the quality of the glue can constantly meet a requirement.

In some embodiments, when a gluing process specific to the workpiece is interrupted, the control device at the gluing workstation instructs the gluing robot to perform the regluing operation.

The regluing operation can ensure that the gluing operation specific to the workpiece is finally completed based on a predetermined design requirement even through the gluing process specific to the workpiece is interrupted.

In some embodiments, the control device at the gluing workstation identifies a gluing zone at which the gluing operation is not completed, the gluing robot removes the glue from the identified gluing zone, and the gluing robot performs the gluing operation at the gluing zone from which the glue is removed.

The regluing operation is performed at only the gluing zone at which the gluing operation is not completed, which can improve regluing efficiency and save the glue.

In some embodiments, switching an automatic gluing mode to the manual gluing mode in response to the user instruction received through the human-machine interface; or switching the manual gluing mode to the automatic gluing mode in response to the user instruction received through the human-machine interface;
where the gluing operation is performed on the workpiece in the manual gluing mode based on the gluing solution designated by the user through the human-machine interface.

In some embodiments, the gluing mode is switched to the manual gluing mode based on the user instruction received through the human-machine interface when it is necessary to perform the gluing operation on the first piece.

The gluing operation is performed on the first piece, which can ensure that the gluing operation meets the design requirement during shifts or when the device restarts production after maintenance.

According to a second aspect, this application provides a gluing system, including: a control device at a gluing workstation for controlling a gluing operation, and a gluing robot for performing the gluing operation, where the control device at the gluing workstation is configured to: invoke a gluing solution for the to-be-glued workpiece; and instruct a gluing robot to perform a gluing operation on the workpiece based on the gluing solution.

The gluing system according to this application helps to improve efficiency and an automation degree of the gluing operation.

In some embodiments, the gluing system further includes a conveying apparatus, where the conveying apparatus includes: a workpiece supporting component, configured to support the workpiece and fix the workpiece onto the workpiece supporting component; and a movement component, configured to move the workpiece supporting component.

In some embodiments, the gluing system further includes a positioning apparatus, configured to fix the workpiece into a position by fixing the workpiece supporting component at the gluing workstation into a position.

In some embodiments, the positioning apparatus includes: a clamping cylinder for clamping the workpiece supporting component in a horizontal direction; a lifting cylinder for lifting the workpiece supporting component; and a positioning bolt for inserting into a corresponding recess in the workpiece supporting component.

The workpiece is fixed into the position into which the workpiece is to be fixed by fixing the workpiece supporting component into the position, which facilitates the operation, without a need to arrange a hole for inserting the positioning bolt in the workpiece.

In some embodiments, the gluing system further includes a camera system, where the camera system is configured to automatically identify the model of the workpiece.

In some embodiments, the gluing system further includes a camera system, where the camera system is configured to automatically identify the position of the workpiece.

When identifying the model and position of the workpiece, the camera system can adapt to workpieces of different types, sizes and heights.

In some embodiments, the camera system calculates an offset of the position of the workpiece relative to the preset position by inspecting the predetermined portion of the workpiece.

In some embodiments, the predetermined portion includes one or more of four corner portions of the workpiece; and the offset of the position of the workpiece relative to the preset position includes at least one of the following: an offset of the position of the workpiece relative to the preset value in a direction of a workpiece movement track, an offset of the position of the workpiece relative to the preset value in a direction perpendicular to the workpiece movement track, and an offset of a steering angle between the workpiece and the direction of the workpiece movement track relative to the preset value.

The camera system determines the offset of the position of the workpiece relative to the preset position, so that the position sensor for detecting the position of the workpiece can be omitted, to better adapt to different types of workpieces.

In some embodiments, the gluing system further includes: a device MES server communicatively connected with the control device at the gluing workstation; a conveying apparatus server communicatively connected with the control device at the gluing workstation and the conveying apparatus; and a factory-level MES server communicatively connected with the device MES server.

The device MES server and the factory-level MES server facilitate centralized storage and centralized processing of data and data security.

In some embodiments, the conveying apparatus is communicatively connected with the conveying apparatus server; the conveying apparatus server is communicatively connected with the control device at the gluing workstation; the conveying apparatus server is configured to forward, to the control device at the gluing workstation, a request, received from the conveying apparatus, for moving to the gluing workstation; and the control device at the gluing workstation determines, in response to the request received from the conveying apparatus, whether to allow the conveying apparatus to move to the gluing workstation.

The conveying apparatus server facilitates centralized control of conveying apparatuses. Wireless communication can be used between the conveying apparatus and the conveying apparatus server, which facilitates freer movement of the conveying apparatus.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is a schematic structural exploded view of a conveying apparatus according to some embodiments of this application;
FIG. 2 is a schematic structural exploded view of a positioning apparatus according to some embodiments of this application;
FIG. 3 is a schematic flowchart of a gluing treatment according to some embodiments of this application;
FIG. 4 is a schematic flowchart of entering a gluing workstation by a conveying apparatus according to some embodiments of this application;
FIG. 5 is a schematic flowchart of invoking a gluing solution according to some embodiments of this application;
FIG. 6 is a schematic flowchart of performing a scheduled glue inspection operation according to some embodiments of this application;
FIG. 7 is a schematic flowchart of performing a regluing operation according to some embodiments of this application;
FIG. 8 is a schematic flowchart of performing a gluing operation on the first piece according to some embodiments of this application;
FIG. 9 is a schematic structural diagram of a gluing system according to some embodiments of this application; and
FIG. 10 is a schematic flowchart of a gluing treatment according to some embodiments of this application.

Reference signs in specific embodiments are as follows:
workstation control device 1000; gluing robot 1100; glue supplying device 1200; camera system 1300; conveying apparatus server 1400; positioning apparatus 1500; and HMI 1600.
conveying apparatus 1410; workpiece supporting component 1411; and movement component 1412.
clamping cylinder 1510; lifting cylinder 1520; and positioning bolt 1530.
device MES server 2000; and factory-level MES server 3000.

### DESCRIPTION OF EMBODIMENTS

An automatic assembly line of a traction battery pack (PACK) includes a gluing workstation for performing a gluing operation on a workpiece that needs gluing.

The gluing operation is to apply glue to the workpiece. In some embodiments, the gluing operation is performed on a box body accommodating the traction battery pack. After curing, the glue can, for example, fix the traction battery pack in the box body. In some embodiments, a gluing operation is performed on a lower box body accommodating the traction battery pack.

For ease of description, a gluing workstation in an embodiment of this application is used as an example in the following embodiments.

In some embodiments, a workstation control device 1000 and a gluing robot 1100 are configured at the gluing workstation.

In some embodiments, the workstation control device 1000 is implemented as a programmable logic controller (PLC). However, a specific implementation of the workstation control device 1000 is not limited to the PLC, but can also be any other computer capable of executing a control program.

In some embodiments, the gluing robot 1100 has multiple movable shafts. The gluing robot 1100 may be, for example, a six-shaft robot, an eight-shaft robot, or a robot with more or less movable shafts. In some embodiments, the six-shaft robot is used as the gluing robot 1100. For example, the gluing robot 1100 can move along a direction X parallel to a movement direction of entering and leaving the workstation by the workpiece, along a horizontal direction Y perpendicular to the direction X and along a vertical direction Z perpendicular to the direction X, and can be positioned by rolling, pitching and yawing movements.

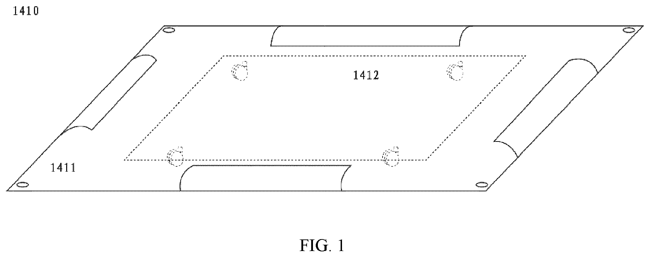

Referring to FIG. 1, FIG. 1 is a schematic structural exploded view of a conveying apparatus according to some embodiments of this application.

The conveying apparatus 1410 can convey the to-be-glued workpiece to the gluing workstation.

According to some embodiments of this application, the conveying apparatus 1410 includes a workpiece supporting component 1411 and a movement component 1412. The conveying apparatus 1410 is sometimes referred to as an automated guided vehicle (AGV). The workpiece supporting component 1411 is sometimes referred to as a pack cart.

As shown schematically in FIG. 1, the workpiece supporting component 1411 is above the movement component 1412. The movement component 1412 is indicated by a dashed line. The movement component 1412 has a drive mechanism such as a motor that is not shown, and has, for example, four sliding components at corners that are adapted to move, for example, wheels. According to some embodiments of this application, for example, the movement component 1412 is hitched to the workpiece supporting component 1411, so that the workpiece supporting component 1411 moves along with the movement component 1412.

According to some embodiments of this application, for example, the workpiece supporting component 1411 fixes the to-be-glued workpiece onto the workpiece supporting component 1411 in a buckle manner or any other fixing manner, so that a position of the to-be-glued workpiece is fixed relative to the workpiece supporting component 1411. In FIG. 1, a fixing component suitable for fixing the to-be-glued workpiece onto the workpiece supporting component 1411 is schematically shown at four inner edges of the workpiece supporting component 1411. According to some embodiments of this application, the fixing component is a buckle suitable for fixing the to-be-glued workpiece onto the workpiece supporting component 1411, but a manner suitable for fixing the to-be-glued workpiece onto the workpiece supporting component 1411 is not limited to the buckle. The workpiece supporting component 1411 can support a workpiece such as a lower box body, as well as an entire battery pack including the lower box body and a battery assembly accommodated therein.

According to some embodiments of this application, the movement component 1412 has a drive mechanism and can drive the workpiece supporting component 1411 to move in, for example, a hooking manner.

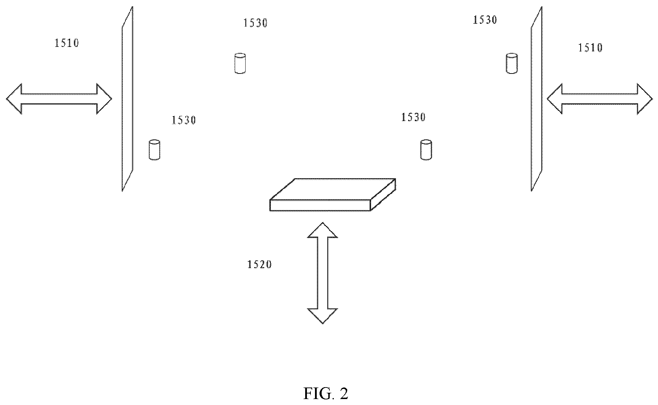

Referring to FIG. 2, FIG. 2 is a schematic structural exploded view of a positioning apparatus according to some embodiments of this application.

According to some embodiments of this application, after the conveying apparatus 1410 moves the to-be-glued workpiece to the gluing workstation, the positioning apparatus 1500 indirectly fixes the workpiece relative to the position of the workstation by fixing the workpiece supporting component 1411 relative to the position of the workstation.

According to some embodiments of this application, the positioning apparatus 1500 includes a clamping cylinder 1510, a lifting cylinder 1520 and a positioning bolt 1530. According to some embodiments of this application, the clamping cylinder 1510 can clamp the workpiece supporting component 1411 in a horizontal direction, the lifting cylinder 1520 (for example, a lifting air cylinder) can lift the workpiece supporting component 1411, and the positioning bolt 1530 can be inserted into a predisposed hole of the workpiece supporting component 1411 for positioning. The clamping cylinder 1510 clamps the workpiece supporting component 1411 (for example, a front portion and a rear portion thereof) in the horizontal direction, so that the workpiece supporting component 1411 can be fixed into the position in the horizontal direction. The lifting cylinder 1520 lifts the workpiece supporting component 1411, so that the workpiece supporting component 1411 can be fixed at the position in the vertical direction. The positioning bolt 1530 is inserted into the predisposed hole of the workpiece supporting component 1411, so that the workpiece supporting component 1411 can be fixed at the position in a horizontal rotation direction.

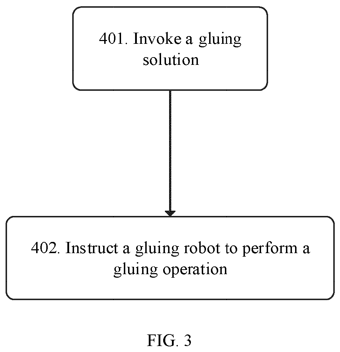

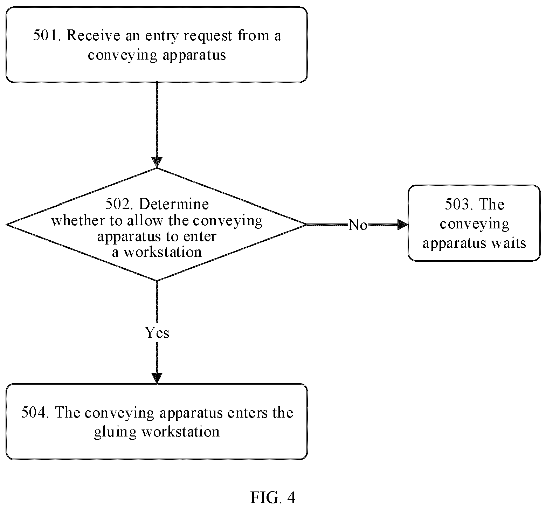

Various operations are performed at the workstation with reference to the description of FIG. 3 to FIG. 8.

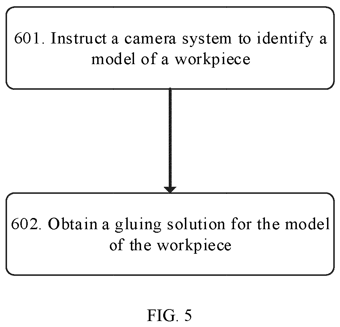

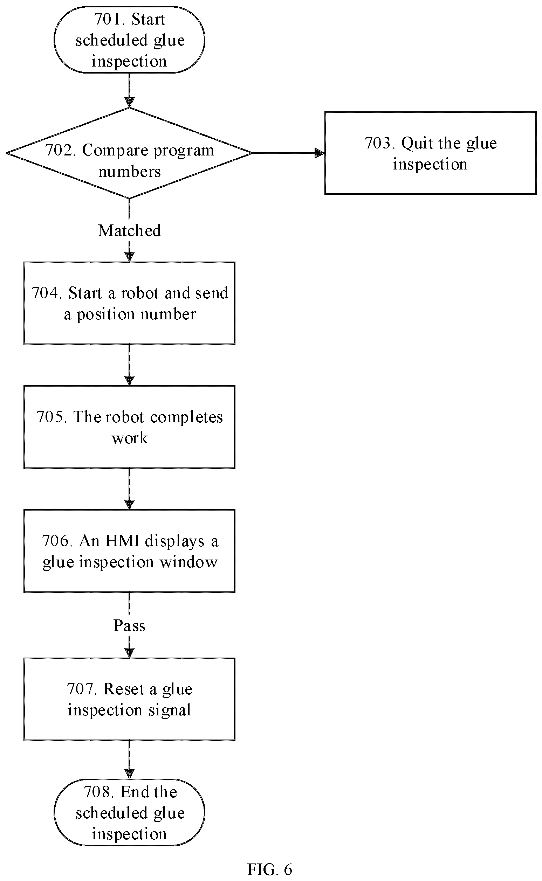

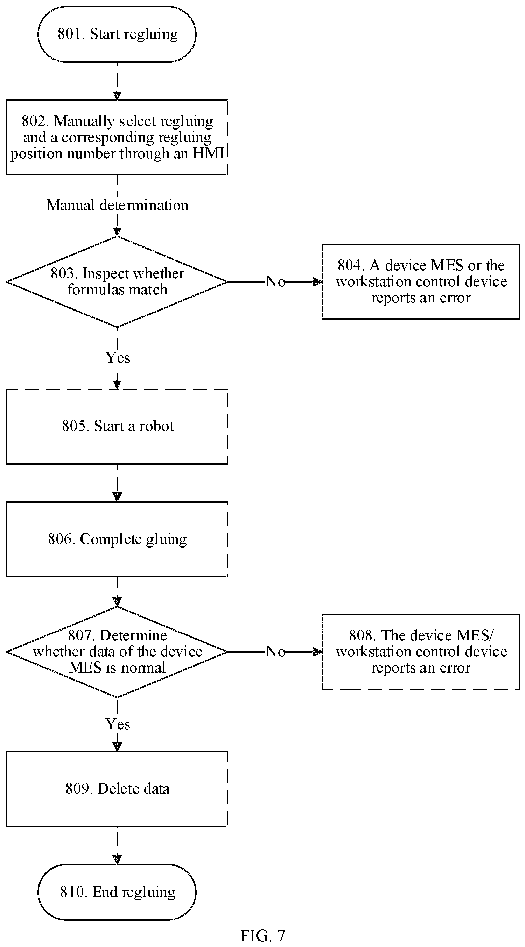

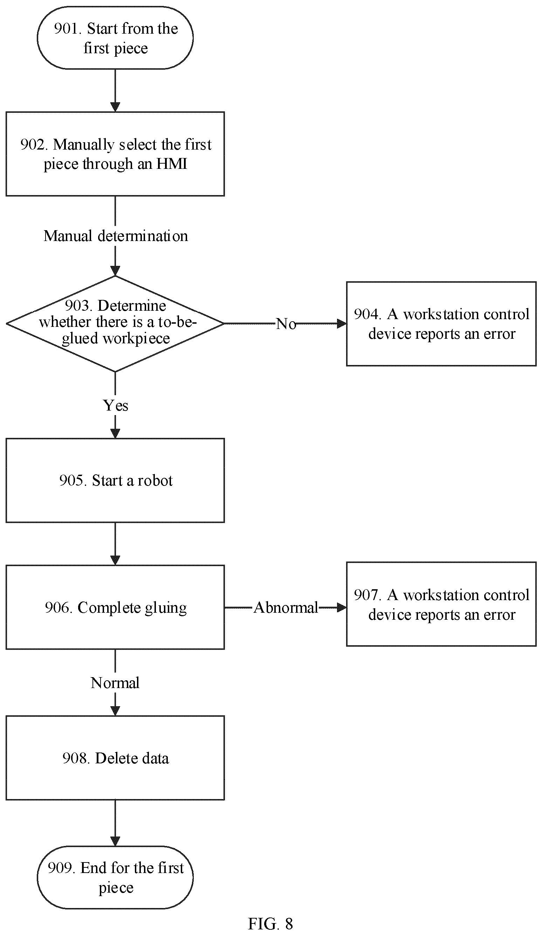

FIG. 3 is a schematic flowchart of a gluing treatment according to some embodiments of this application; FIG. 5 is a schematic flowchart of entering a gluing workstation by a conveying apparatus according to some embodiments of this application; FIG. 5 is a schematic flowchart of invoking a gluing solution according to some embodiments of this application; FIG. 6 is a schematic flowchart of performing a scheduled glue inspection operation according to some embodiments of this application; FIG. 7 is a schematic flowchart of performing a regluing operation according to some embodiments of this application; and FIG. 8 is a schematic flowchart of performing a gluing operation on the first piece according to some embodiments of this application.

Referring to FIG. 3, FIG. 3 is a schematic flowchart of a gluing method according to some embodiments of this application.

In step 401 of invoking the gluing solution, the workstation control device 1000 invokes the gluing solution for the to-be-glued workpiece. According to some embodiments of this application, the workstation control device 1000 automatically invokes the gluing solution for the to-be-glued workpiece.

In the step 402 of instructing the gluing robot to perform the gluing operation, the workstation control device 1000 instructs the gluing robot 1100 to perform the gluing operation. According to some embodiments of this application, the gluing operation is automatically performed by the gluing robot 1100 based on an instruction of the workstation control device 1000.

The gluing solution is sometimes referred to as formula, and the gluing solution and the formula have the same meaning. According to some embodiments of this application, the gluing solution specifies a gluing track, a width of the gluing track, an ingredient ratio of the glue, and an amount of glue to be applied to the gluing track per unit area for a workpiece of a target model.

According to some embodiments of this application, the glue for gluing includes one or more ingredients. When the glue for gluing includes multiple ingredients, the gluing solution specifies an ingredient ratio of the glue for the workpiece of the target model to perform gluing. For example, based on some embodiments of this application, the glue for gluing includes two different ingredient glues A and B, and the gluing solution specifies weight ratios of the ingredient glues A and B in the mixed glue for gluing, for example, A: B = 20:80, A: B = 30:70, A: B = 40:60, A: B = 50:50, A: B = 60:40, A: B = 70:30, or A: B = 80:20. According to some embodiments of this application, the workstation control device 1000 calculates ratios of ingredient glues in the mixed glue for gluing by using flow rates of different ingredient glues supplied by the gluing robot 1100.

The gluing track specified in the gluing solution specifies a sequence of performing gluing on various portions of the workpiece by the gluing robot 1100.

An amount of glue to be applied to the gluing track per unit area specified in the gluing solution is sometimes referred to as glue weight. According to some embodiments of this application, the workstation control device 1000 calculates the glue weight by using the flow rate of glue supplied by the gluing robot 1100.

Referring to FIG. 5, FIG. 5 is a schematic flowchart of entering a gluing workstation by a conveying apparatus according to some embodiments of this application.

In step 501 of receiving an entry request from the conveying apparatus, the workstation control device 1000 receives the request for entering the gluing workstation from the conveying apparatus 1410. According to some embodiments of this application, the conveying apparatus 1410 is communicatively connected with the conveying apparatus server 1400. The conveying apparatus 1410 can be connected with the conveying apparatus server 1400 through wireless communication. Compared with wired communication, wireless communication between the conveying apparatus 1410 and the conveying apparatus server 1400 facilitates more flexible movement of the conveying apparatus 1410.

According to some embodiments of this application, the conveying apparatus 1410 sends a request for entering the gluing workstation to the conveying apparatus server 1400, and the conveying apparatus server 1400 forwards, to the workstation control device 1000, the request of the conveying apparatus 1410 to enter the gluing workstation.

In step 502 of determining whether to allow the conveying apparatus to enter the workstation, the workstation control device 1000 determines whether to allow the conveying apparatus 1410 to enter the gluing workstation. According to some embodiments of this application, the workstation control device 1000 needs to determine whether the gluing workstation is occupied. According to some embodiments of this application, the workstation control device 1000 needs to determine whether the gluing robot 1100 is ready to work. According to some embodiments of this application, the workstation control device 1000 needs to determine whether a glue supplying device 1200 is ready to supply the glue to the gluing robot 1100 based on the gluing solution.

If the workstation control device 1000 determines that the conveying apparatus 1410 is allowed to enter the workstation, the conveying apparatus 1410 enters the gluing workstation (504). If the workstation control device 1000 determines that the conveying apparatus 1410 is not allowed to enter the workstation, the conveying apparatus 1410 waits (503) and the conveying apparatus 1410 can resend a request for entering the gluing workstation.

Referring to FIG. 5, FIG. 5 is a schematic flowchart of invoking a gluing solution according to some embodiments of this application.

In step 601 of instructing a camera system to identify a model of a workpiece, the workstation control device 1000 instructs the camera system 1300 to identify the model of the workpiece. According to some embodiments of this application, the camera system 1300 may include one or more cameras, for example, two or four cameras.

According to some embodiments of this application, the camera system 1300 captures an image of a to-be-glued workpiece, and determines the position of the glued workpiece based on analysis of the captured image. According to some embodiments of this application, the camera system 1300 determines positions of the four corners of the to-be-glued workpiece based on analysis of the captured image. The camera system 1300 can also determine a position of any other characteristic portion of the to-be-glued workpiece based on the analysis of the captured image.

According to some embodiments of this application, based on the positions of, for example, four corners of the to-be-glued workpiece determined through analysis, the camera system 1300 determines the length, width, and height of the workpiece and another characteristic related to the model of the workpiece, to determine the model of the workpiece.

When determining the model of the workpiece, the camera system 1300 can adapt to workpieces of different types, sizes and heights.

The camera system 1300 based on some embodiments of this application can replace a conventional position sensor for detecting a position. According to some embodiments of this application, it is not necessary to arrange a conventional position sensor for detecting a position of the workpiece supporting component.

The camera system 1300 based on some embodiments of this application can directly detect the position of the workpiece, instead of indirectly detecting the position of the workpiece by detecting the position of the workpiece supporting component 1411, which helps to detect the position of the workpiece more accurately.

According to some embodiments of this application, when analyzing and determining the position of the glued workpiece, the camera system 1300 can also analyze and determine offset data of the position of the workpiece relative to a preset position.

According to some embodiments of this application, preset positions of various models of workpieces are prestored in a memory of a control device at the gluing workstation, or the preset positions of various types of workpieces are prestored in the device MES server.

According to some embodiments of this application, the offset, analyzed and determined by the camera system 1300, of the position of the gluing workpiece relative to the preset position includes at least one of the following: an offset of the position of the workpiece relative to the preset value in a direction of a workpiece movement track, an offset of the position of the workpiece relative to the preset value in a direction perpendicular to the workpiece movement track, and an offset of a steering angle between the workpiece and the direction of the workpiece movement track relative to the preset value.

There is inevitable tolerance caused by a factor such as a manufacturing error even between workpieces of the same model.

According to some embodiments of this application, the camera system 1300 analyzes and determines the tolerance between sizes of the workpieces of the same model. Even the tolerance between the sizes of the workpieces of the same model can also sometimes reach ±2 cm.

Based on the tolerance between the sizes of the workpieces that is analyzed and determined by the camera system 1300, the gluing solution can be executed by the gluing robot 1100 with reference to the tolerance between the sizes of the workpieces. For example, for multiple workpieces with tolerance, the position of the gluing track relative to a center of each workpiece is basically kept unchanged.

The camera system 1300 analyzes and determines the models of the workpieces and the tolerance between the sizes of the workpieces, which helps to simplify control logic of the gluing system and helps the workstation control device 1000 to instruct the movement component 1412 and the positioning apparatus 1500 to position the to-be-glued workpiece at the preset position more accurately.

In the step of obtaining the gluing solution for the model of the workpiece in FIG. 5, the workstation control device 1000 obtains the gluing solution for the model of the workpiece.

According to some embodiments of this application, a unique identification (ID) number for identifying the solution is allocated to each gluing solution. Each gluing solution defines a target model of the workpiece targeted by the gluing solution, the gluing track and the width of the gluing track, the ingredient ratio of the glue, and weight of the glue required for the gluing track per unit area.

According to some embodiments of this application, a unique identification (ID) number for identifying the model of the workpiece is allocated to the model of each workpiece, and the model of each workpiece defines characteristics such as a length, width, height, and shape of the workpiece of the model.

According to some embodiments of this application, the gluing solution for the workpiece and the model of the workpiece are correspondingly prestored in the memory of the workstation control device 1000.

According to some embodiments of this application, the gluing solution for the workpiece and the model of the workpiece are correspondingly prestored in the device MES server 2000.

According to some embodiments of this application, the workstation control device 1000 searches its memory for the gluing solution for the workpiece (602).

According to some embodiments of this application, the workstation control device 1000 requests the gluing solution for the workpiece from the device MES server 2000. The device MES server 2000 automatically distributes the gluing solution for the workpiece in response to the request from the workstation control device 1000 (602).

According to some embodiments of this application, the gluing solution is stored in both the memory of the workstation control device 1000 and the device MES server 2000.

The storage of the gluing solution in the device MES server 2000 helps to improve data security of the gluing system and makes it more convenient for the workstation control device 1000 to obtain the gluing solution.

Referring to FIG. 6, FIG. 6 is a schematic flowchart of performing a scheduled glue inspection operation according to some embodiments of this application.

In response to timing of starting scheduled glue inspection, an operation of performing the scheduled glue inspection is started (701).

When the scheduled glue inspection is started, in step 702 of comparing program numbers, the workstation control device 1000 compares the identification (ID) number of the gluing solution currently executed at the gluing workstation with the identification (ID) number of the gluing solution targeted by the scheduled glue inspection operation.

If the identification (ID) number of the gluing solution currently executed at the gluing workstation is inconsistent with the identification (ID) number of the gluing solution targeted by the scheduled glue inspection operation, it means that the identification (ID) number of the gluing solution currently executed at the gluing workstation does not match the identification (ID) number of the gluing solution targeted by the scheduled glue inspection operation, and therefore, the glue inspection is quit (703).

If the identification (ID) number of the gluing solution currently executed at the gluing workstation is consistent with the identification (ID) number of the gluing solution targeted by the scheduled glue inspection operation, it means that the identification (ID) number of the gluing solution currently executed at the gluing workstation matches the identification (ID) number of the gluing solution targeted by the scheduled glue inspection operation, step 704 of starting the robot and sending a position number is performed.

In step 704 of starting the robot and sending the position number, the workstation control device 1000 sends, to the gluing robot 1100, a number of a position at which a container for receiving the glue sample is located. According to some embodiments of this application, multiple containers for receiving glue samples are disposed. Based on the number of the position at which the container for receiving the glue sample is located, the gluing robot 1100 discharges the glue sample into the corresponding container for receiving the glue sample.

In step 705 in which the robot completes work, the robot returns to an initial position. The initial position of the robot is also referred to as HOME point of the robot.

According to some embodiments of this application, the robot discharges, at the initial position, the glue sample into the container for receiving the glue sample, that is, a glue discharge position at which the robot discharges the glue for the scheduled glue inspection is also the initial position of the robot.

In step 706 in which the HMI displays a glue inspection window, the workstation control device 1000 controls the human-machine interface (HMI) to display the glue inspection window to remind the user to fetch the glue sample for the scheduled glue inspection. According to some embodiments of this application, the human-machine interface (HMI) is implemented as a touchscreen communicatively connected with the workstation control device 1000.

When a result of the scheduled glue inspection indicates pass, in step 707 of resetting a glue inspection signal, the glue inspection signal is reset to restart the next scheduled glue inspection cycle and end the current scheduled glue inspection cycle (708).

According to some embodiments of this application, duration ranging from 0.5 hours to 2 hours is set as duration of the scheduled glue inspection cycle. For example, the duration of the scheduled glue inspection cycle can be set to 1 hour. The scheduled glue inspection operation is performed once within duration of each scheduled glue inspection cycle.

The mechanism of the scheduled glue inspection is set in the gluing system, which can reduce an omission probability of the glue inspection operation and facilitate the scheduled glue inspection operation.

Referring to FIG. 7, FIG. 7 is a schematic flowchart of performing a regluing operation according to some embodiments of this application.

During working of the gluing system, the gluing operation is sometimes interrupted. For example, when the gluing operation for the workpiece is not successfully completed because the component of the gluing system is faulty or disturbed, a regluing operation needs to be performed.

According to some embodiments of this application, an entire gluing zone for a single workpiece is divided into multiple sub-zones, and each sub-zone is given a position number for representing the sub-zone. The regluing operation can be performed at a sub-zone in which the gluing operation is not successfully completed, instead of performing the regluing operation on the entire workpiece. This can reduce material costs and time consumption.

According to some embodiments of this application, when the regluing operation is started (801), in the step 802 of manually selecting regluing and a corresponding regluing position number through the HMI, the user selects the regluing operation through the human-machine interface (HMI), and the user selects, through the human-machine interface (HMI), a position number corresponding to the position at which the regluing operation needs to be performed. For example, the user designates, through the human-machine interface (HMI), a position number of a sub-zone at which the regluing operation needs to be performed.

According to some embodiments of this application, it can be manually determined whether the position number of the sub-zone at which the regluing operation needs to be performed is correct. To reduce an error probability, the position number can be manually determined multiple times, for example, thrice.

In step 803 of inspecting whether formulas match, the workstation control device 1000 compares the identification (ID) number of the gluing solution currently executed at the gluing workstation with the identification (ID) number of the gluing solution used for the regluing operation.

If the identification (ID) number of the gluing solution currently executed at the gluing workstation is inconsistent with the identification (ID) number of the gluing solution used for the regluing operation, it means that the identification (ID) number of the gluing solution currently executed at the gluing workstation does not match the identification (ID) number of the gluing solution used for the regluing operation, the workstation control device 1000 reports an error to the user through the human-machine interface (HMI), and the workstation control device 1000 uploads error information to the device MES server 2000 (804).

According to some embodiments of this application, the device MES server 2000 centralizes and stores gluing data, information indicating whether the gluing data is normal, and specific error information of faulty gluing data.

Centralized storage of all kinds of data in the device MES server 2000 helps to improve data security of the gluing system and facilitate subsequent centralized data analysis and processing.

If the identification (ID) number of the gluing solution currently executed at the gluing workstation is consistent with the identification (ID) number of the gluing solution used for the regluing operation, it means that the identification (ID) number of the gluing solution currently executed at the gluing workstation matches the identification (ID) number of the gluing solution used for the regluing operation, the gluing robot 1100 is started (805). The gluing robot 1100 performs the regluing operation at the sub-zone at which the regluing operation needs to be performed based on the position number of the sub-zone at which the regluing operation needs to be performed and that is specified by the user. When there is a glue residue at the sub-zone at which the regluing operation needs to be performed after a previous uncompleted gluing operation, regluing operations of the gluing robot 1100 at the sub-zone include removal of the glue residue after the previous uncompleted gluing operation and regluing of the sub-zone. When there is no glue residue at the sub-zone at which the regluing operation needs to be performed after the previous uncompleted gluing operation, the gluing robot 1100 directly performs the gluing operation at the sub-zone.

When gluing of the entire workpiece is completed (806), in the step in which the device MES determines whether data is normal, the device MES server 2000 determines the gluing data uploaded from the workstation control device 1000 to determine whether the gluing data uploaded from the workstation control device 1000 is normal.

According to some embodiments of this application, based on at least one or more of the gluing track, the width of the gluing track, the ingredient ratio of the glue and the glue weight of the gluing track per unit area, it is determined whether the gluing data uploaded from the workstation control device 1000 is normal (807).

When the device MES server 2000 determines that the gluing data uploaded from the workstation control device 1000 is abnormal, in step 808 in which the device MES/workstation control device reports an error, the device MES server 2000 distributes error information to the workstation control device 1000, the workstation control device 1000 reports the error to the user through the human-machine interface (HMI), and the device MES server 2000 records the gluing data and the error information.

When the device MES server 2000 determines that the gluing data uploaded from the workstation control device 1000 is abnormal, the device MES server 2000 informs the workstation control device 1000 of information indicating that the gluing data meets the requirement, the workstation control device 1000 deletes the gluing data generated during the regluing operation (809), and the regluing operation is ended (810).

Referring to FIG. 8, FIG. 8 is a schematic flowchart of performing a gluing operation on the first piece according to some embodiments of this application.

During actual production, sometimes, it is necessary to perform the gluing operation on the first piece. For example, after a shift between different teams, a new team usually performs the gluing operation on the first piece. For another example, when the gluing system or one of its components recovers from a fault, the gluing operation can also be performed on the first piece.

When the gluing operation for the first piece is started (901), in step 902 of manually selecting the first piece through the HMI, the user inputs, through the human-machine interface (HMI), an instruction for performing the gluing operation on the first piece, and manually determines whether the gluing solution for performing the gluing operation on the first piece is correct. To reduce an error probability, the gluing operation can be manually determined multiple times, for example, thrice.

In step 903 of determining whether there is the to-be-glued workpiece, the workstation control device 1000 determines whether there is the to-be-glued workpiece at the workstation. According to some embodiments of this application, based on information provided by the camera system 1300, the workstation control device 1000 determines whether there is the to-be-glued workpiece at the workstation, and the information provided by the camera system 1300 includes specific position information of the to-be-glued workpiece.

If the workstation control device 1000 determines that there is no to-be-glued workpiece at the workstation, the workstation control device 1000 reports an error to the user through the human-machine interface (HMI) (904).

If the workstation control device 1000 determines that there is the to-be-glued workpiece at the workstation, the workstation control device 1000 instructs to start the gluing robot 1100 (905).

The gluing robot 1100 performs the gluing operation based on the gluing solution.

When the gluing operation is completed (9060), the workstation control device 1000 uploads the gluing data to the device MES server 2000. The device MES server 2000 determines whether the gluing data is normal.

When the gluing data is abnormal, the device MES server 2000 distributes the error information to the workstation control device 1000, and the workstation control device 1000 reports the error to the user through the human-machine interface (HMI) (907).

When the gluing data is normal, the device MES server 2000 distributes the normal information to the workstation control device 1000, and the workstation control device 1000 deletes the gluing data about the workpiece from the workstation control device 1000 in response to the normal information (908) and ends the gluing operation for the first piece (909).

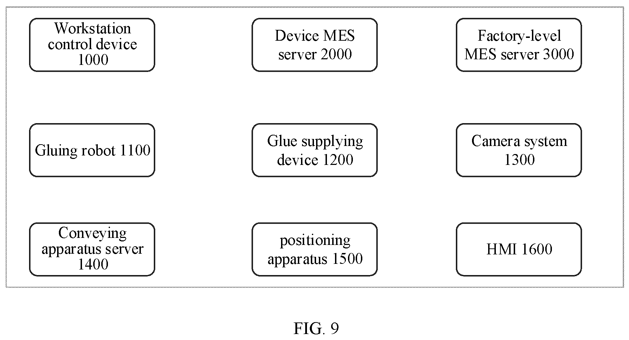

Referring to FIG. 9, FIG. 9 is a schematic structural diagram of a gluing system according to some embodiments of this application.

According to some embodiments of this application, multiple workstation control devices 1000 are respectively provided for multiple gluing workstations.

According to some embodiments of this application, the workstation control device 1000 is connected with the device MES server 2000 and a factory-level MES server 3000 through a communication network. According to some embodiments of this application, the workstation control device 1000, the device MES server 2000 and the factory-level MES server 3000 are interconnected through Ethernet (Ethernet). Persons skilled in the art can understand that the workstation control device 1000, the device MES server 2000 and the factory-level MES server 3000 can also be interconnected through another type of network.

According to some embodiments of this application, the workstation control device 1000 is connected to the gluing robot 1100, the glue supplying device 1200, the camera system 1300, the conveying apparatus server 1400, the positioning apparatus 1500 and the HMI 1600 through a communication network. According to some embodiments of this application, the workstation control device 1000, the gluing robot 1100, the glue supplying device 1200, the camera system 1300, the conveying apparatus server 1400, the positioning apparatus 1500 and the HMI 1600 are interconnected through Profinet (Profinet). Persons skilled in the art can understand that the workstation control device 1000, the gluing robot 1100, the glue supplying device 1200, the camera system 1300, the conveying apparatus server 1400, the positioning apparatus 1500 and the HMI 1600 can also be interconnected through another type of network.

According to some embodiments of this application, the conveying apparatus 1410 is connected with the conveying apparatus server 1400 through wireless communication. The conveying apparatus 1410 moves based on an instruction sent by the workstation control device 1000 via the conveying apparatus server 1400, to convey the to-be-glued workpiece to the gluing workstation and convey the glued workpiece away from the gluing workstation.

According to some embodiments of this application, the conveying apparatus 1410 further includes a workpiece supporting component 1411 and a movement component 1412. The workpiece supporting component 1411 can fix the workpiece onto the workpiece supporting component 1411 by, for example, a buckle.

According to some embodiments of this application, the positioning apparatus 1500 further includes a clamping cylinder 1510, a lifting cylinder 1520 and a positioning bolt 1530, so that the workpiece supporting component 1411 can be fixed at the position in the horizontal direction, the vertical direction and the horizontal rotation direction.

According to some embodiments of this application, the device MES server 2000 is communicatively connected with multiple workstation control devices 1000. According to some embodiments of this application, the device MES server 2000 provides services for the multiple workstation control devices 1000 communicatively connected with the device MES server, including a gluing formula distribution service, a gluing data uploading service, a gluing data checking service, an error information distribution service, an error information storage service, and the like.

According to some embodiments of this application, the device MES server 2000 provides services for the multiple workstation control devices 1000 communicatively connected with the device MES server by virtue of a stronger storage capacity and computing capacity of the device MES server 2000 compared with the workstation control devices 1000, and the device MES server 2000 can provide stronger data security and better facilitate centralized data processing compared with the workstation control devices 1000.

According to some embodiments of this application, the factory-level MES server 3000 can provide a data uploading service, a data storage service, a data distribution service, a data processing service, and the like at the whole factory level.

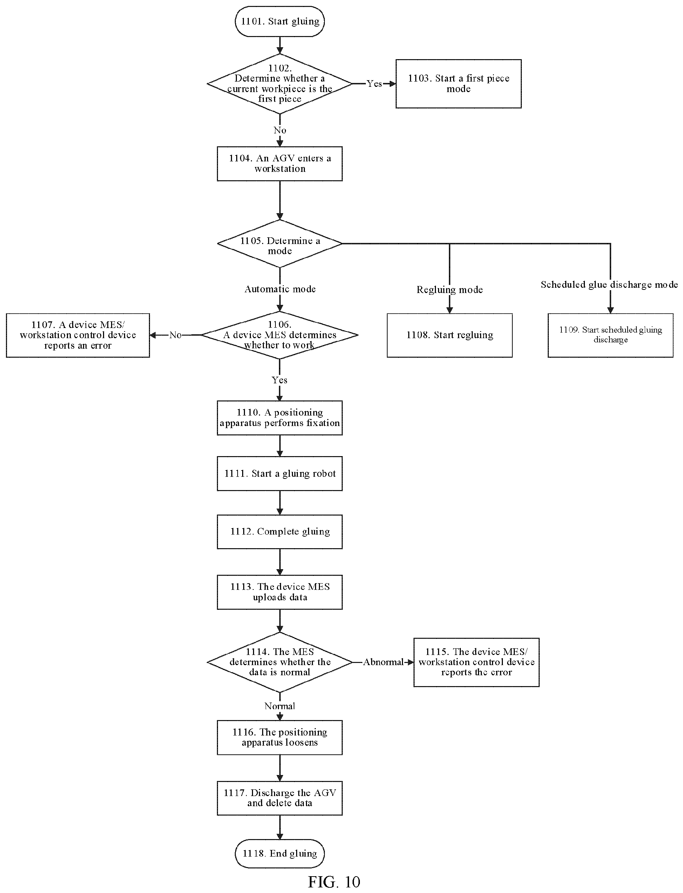

Referring to FIG. 10, FIG. 10 is a schematic flowchart of a gluing treatment according to some embodiments of this application.

When the gluing operation is started (1101), in step 1102 of determining whether a current workpiece is the first piece, the workstation control device 1000 determines whether the current workpiece is the first piece. According to some embodiments of this application, the workstation control device 1000 determines that the current workpiece is the first piece based on the instruction for performing the gluing operation on the first piece that is input by the user through the human-machine interface (HMI).

When the workstation control device 1000 determines that the current workpiece is the first piece, a first piece mode is started under the control of the workstation control device 1000 (1103), and the current workpiece is glued in the first piece mode.

In the process of gluing the current workpiece in the first piece mode, the user manually determines whether the gluing solution for the gluing operation of the first piece is correct, the workstation control device 1000 determines whether there is the to-be-glued workpiece at the workstation, the gluing robot 1100 performs the gluing operation based on the gluing solution, and the device MES server 2000 determines whether the gluing data is normal. When the gluing data is abnormal, the device MES server 2000 distributes error information to the workstation control device 1000. The workstation control device 1000 reports an error to the user through the human-machine interface (HMI).

According to some embodiments of this application, the device MES server 2000 centralizes and stores gluing data, information indicating whether the gluing data is normal, and specific error information of faulty gluing data.

When the workstation control device 1000 determines that the current workpiece is not the first piece, the workstation control device 1000 allows the conveying apparatus (AGV) 1410 to enter the workstation (access the workstation). According to some embodiments of this application, the workstation control device 1000 transmits, to the conveying apparatus 1410 through the conveying apparatus server 1400, a message that the conveying apparatus (AGV) 1410 is allowed to enter the workstation. The conveying apparatus (AGV) 1410 enters the workstation (1104).

In step 1105 of determining the mode, the workstation control device 1000 determines whether a current working mode is an automatic mode, a regluing mode or a scheduled glue discharge mode. The automatic mode is a mode of automatically performing the gluing operation. The regluing mode is a mode of performing the regluing operation on the workpiece on which the gluing operation is interrupted. The scheduled glue discharge mode is a mode in which the gluing robot 1100 discharges the glue regularly when the gluing operation is not being performed currently.

The scheduled glue discharge mode can prevent quality deterioration of the glue because the glue is not in use for a long time, for example, solidification or deterioration of the glue near a glue discharge nozzle. According to some embodiments of this application, a scheduled glue discharge operation is performed once at intervals of preset duration in the scheduled glue discharge mode. According to some embodiments of this application, the preset duration is a preset value ranging from 3 minutes to 10 minutes, for example, 3 minutes, 4 minutes, 5 minutes, 6 minutes, 7 minutes, 8 minutes, 9 minutes or 10 minutes.

According to some embodiments of this application, in the scheduled glue discharge mode, scheduled gluing is started (1109), and the gluing robot 1100 is located at the initial position (HOME point) when scheduled gluing is performed. The operation in the scheduled glue discharge mode can constantly ensure that the quality of the glue for gluing the workpiece do not deteriorate.

In the regluing mode, the user selects a regluing operation (1108) through the human-machine interface (HMI), and the user specifies, through the human-machine interface (HMI), the position number of the sub-zone at which the regluing operation needs to be performed.

According to some embodiments of this application, it can be manually determined multiple times (for example, thrice) whether the position number of the sub-zone at which the regluing operation needs to be performed is correct.

According to some embodiments of this application, the workstation control device 1000 compares the identification (ID) number of the gluing solution currently executed at the gluing workstation with the identification (ID) number of the gluing solution used for the regluing operation.

If the identification (ID) number of the gluing solution currently executed at the gluing workstation is inconsistent with the identification (ID) number of the gluing solution used for the regluing operation, the workstation control device 1000 reports an error to the user through the human-machine interface (HMI), and the workstation control device 1000 uploads error information to the device MES server 2000.

If the identification (ID) number of the gluing solution currently executed at the gluing workstation is consistent with the identification (ID) number of the gluing solution used for the regluing operation, the gluing robot 1100 is started to perform the regluing operation at the sub-zone at which the regluing operation needs to be performed based on the position number of the sub-zone at which the regluing operation needs to be performed and that is specified by the user.

According to some embodiments of this application, the workstation control device 1000 uploads the gluing data to the device MES server 2000.

According to some embodiments of this application, the device MES server 2000 stores the gluing data uploaded by the workstation control device 1000 and judges the gluing data uploaded by the workstation control device 1000 to determine whether the gluing data uploaded by the workstation control device 1000 is normal.

According to some embodiments of this application, based on at least one or more of the gluing track, the width of the gluing track, the ingredient ratio of the glue and the glue weight of the gluing track per unit area, it is determined whether the gluing data uploaded from the workstation control device 1000 is normal.

When the device MES server 2000 determines that the gluing data uploaded from the workstation control device 1000 is abnormal, in step 1107 in which the device MES/workstation control device reports an error, the device MES server 2000 distributes error information to the workstation control device 1000, the workstation control device 1000 reports the error to the user through the human-machine interface (HMI), and the device MES server 2000 records the gluing data and the error information.

In the automatic mode, in step 1106 in which the device MES determines whether to work, the device MES server 2000 determines whether to perform an automatic gluing operation. According to some embodiments of this application, the device MES server 2000 determines whether to perform the automatic gluing operation based on a state of at least one or more of the workstation control device 1000, the gluing robot 1100, the glue supplying device 1200, the camera system 1300, the conveying apparatus server 1400, the positioning apparatus 1500 and the HMI 1600. According to some embodiments of this application, it is determined whether to perform the automatic gluing operation based on a normal working state of the workstation control device 1000, the gluing robot 1100, the glue supplying device 1200, the camera system 1300, the conveying apparatus server 1400, and the positioning apparatus 1500. According to some embodiments of this application, it is determined whether to perform the automatic gluing operation based on a normal working state of the workstation control device 1000, the gluing robot 1100, the glue supplying device 1200, the camera system 1300, the conveying apparatus server 1400, the positioning apparatus 1500 and the HMI 1600.

According to some embodiments of this application, the workstation control device 1000 determines whether the workstation is working (1106).

When the device MES server 2000 determines that the workstation is not working, the workstation control device 1000 reports an error to the user through the human-machine interface (HMI), and the workstation control device 1000 uploads error information to the device MES server 2000.

When the device MES server 2000 determines that the workstation is working, the positioning apparatus 1500 fixes the workpiece at the position (1110). According to some embodiments of this application, the clamping cylinder 1510 clamps the workpiece supporting component 1411 through front and rear clamping air cylinders, the positioning bolt 1530 is inserted, through an air cylinder of the positioning bolt, into the predisposed hole of the workpiece supporting component 1411 for positioning, and the lifting cylinder 1520 lifts the workpiece supporting component 1411 through the lifting air cylinder.

According to some embodiments of this application, the workstation control device 1000 determines whether the gluing robot 1100 is online. If the gluing robot 1100 is online, the workstation control device 1000 instructs the gluing robot 1100 to start (1111) to perform the gluing operation based on the gluing solution.

According to some embodiments of this application, when the gluing robot 1100 completes the gluing operation (1112), the workstation control device 1000 uploads (1113) gluing data for each workpiece to the device MES server 2000.

According to some embodiments of this application, the device MES server 2000 determines whether the gluing data uploaded by the workstation control device 1000 is normal (1114).

If the device MES server 2000 determines that the gluing data is abnormal, the device MES server 2000 distributes error information to the workstation control device 1000, the workstation control device 1000 reports the error to the user through the human-machine interface (HMI) (1115), and the device MES server 2000 records the gluing data and the error information. When the device MES server 2000 determines that the gluing data is abnormal, the user receives the error information, and the user can decide how to respond based on the error information.

According to some embodiments of this application, when the device MES server 2000 determines that the gluing data is normal (1114), the device MES server 2000 uploads the gluing data to the factory-level MES server 3000.

According to some embodiments of this application, when the gluing data is uploaded successfully, the positioning apparatus 1500 releases the workpiece supporting component 1411 (1116). According to some embodiments of this application, when the gluing data is uploaded successfully, the positioning bolt 1530 retracts, the lifting cylinder 1520 retracts, and the clamping cylinder 1510 for front and rear clamping retracts, so that the positioning apparatus 1500 releases the workpiece supporting component 1411.

According to some embodiments of this application, when the device MES server 2000 determines that the gluing data is normal, the positioning apparatus 1500 releases the workpiece supporting component 1411 (1116).

According to some embodiments of this application, when the device MES server 2000 determines that the gluing data is normal, the workstation control device 1000 instructs the conveying apparatus 1410 to leave the workstation (1117).

According to some embodiments of this application, the workstation control device 1000 transmits the instruction to the conveying apparatus 1410 through the conveying apparatus server 1400. In response to the instruction from the workstation control device 1000, the conveying apparatus 1410 moves away from the workstation, and the conveying apparatus 1410 sends a leaving signal to the workstation control device 1000 through the conveying apparatus server 1400. After the conveying apparatus 1410 leaves the workstation, the conveying apparatus 1410 sends a leaving completion signal to the workstation control device 1000 through the conveying apparatus server 1400.

According to some embodiments of this application, when the workstation control device 1000 receives the leaving completion signal from the conveying apparatus 1410, the workstation control device 1000 deletes the gluing data from the workstation control device 1000 (1117).

According to some embodiments of this application, when the device MES server 2000 determines that the gluing data is normal, the workstation control device 1000 deletes the gluing data from the workstation control device 1000 in response to a notification which indicates that the gluing data is normal and that is received from the device MES server 2000 (1117).

In the automatic mode, the gluing system automatically cyclically performs each step of the gluing operations for multiple workpieces, including, but not limited to, workstation entry of the workpiece, fixation of the workpiece, invocation of the gluing solution, gluing, retraction of the lifting cylinder, leaving from the workstation, deletion of the gluing data at the workstation, and the like.

When gluing operations for all the workpieces are completed, the cycle of the automatic gluing operation is ended (1118).

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A method for controlling gluing of a workpiece, comprising:
allowing a conveying apparatus to move a to-be-glued workpiece to a gluing workstation;
determining a gluing mode of the to-be-glued workpiece based on a user instruction received through a human-machine interface;
fixing the to-be-glued workpiece into a position;
invoking a gluing solution for the to-be-glued workpiece;
instructing a gluing robot to perform a gluing operation on the workpiece based on the gluing solution; and
uploading gluing data to a device manufacturing execution system server.

2. The method according to claim 1, applied to a control device at the gluing workstation,
wherein the invoking a gluing solution for the to-be-glued workpiece comprises:
instructing a camera system to identify a model of the workpiece; and
obtaining, based on the identified model of the workpiece, the gluing solution for the model of the workpiece from a memory of the control device at the gluing workstation or from the device manufacturing execution system server, and
wherein the instructing a gluing robot to perform a gluing operation on the workpiece based on the gluing solution comprises: informing, of the gluing robot, information comprising at least one of an ingredient ratio of the glue, a shape and width of a gluing track and an amount of glue to be applied per unit area of the gluing track.

3. The method according to claim 2, further comprising:
determining, by the control device at the gluing workstation in response to a request of the conveying apparatus, whether to allow the conveying apparatus to move the to-be-glued workpiece to the gluing workstation.

4. The method according to claim 3, further comprising:
instructing, by the control device at the gluing workstation, a positioning apparatus to fix a workpiece supporting component of the conveying apparatus at the gluing workstation into a position.

5. The method according to claim 3, further comprising:
instructing, by the control device at the gluing workstation, a camera system to identify a position to which the workpiece is to be fixed.

6. The method according to any one of claims 1 to 5, wherein
the gluing mode is switched to a manual gluing mode based on the user instruction received through the human-machine interface when the workpiece is the first piece.

7. The method according to claim 6, wherein the gluing solution specific to the workpiece and the workpiece model are correspondingly prestored in the device manufacturing execution system server, and the method further comprises:
requesting the gluing solution specific to the workpiece from the device manufacturing execution system server; and
receiving the gluing solution specific to the workpiece from the device manufacturing execution system server.

8. The method according to claim 7, further comprising:
sending a position number of a glue sample box for holding a glue sample for scheduled glue inspection to the gluing robot;
instructing the gluing robot to discharge the glue sample into the glue sample box, and
informing the user of the position number of the glue sample box.

9. The method according to claim 7, further comprising:
performing a regluing operation when a gluing process specific to the workpiece is interrupted.

10. The method according to claim 9, wherein the regluing operation further comprises:
determining a regluing position number based on the user instruction received through the human-machine interface;
instructing the gluing robot to remove glue in a zone corresponding to the regluing position number; and
instructing the gluing robot to perform a gluing operation at the zone corresponding to the regluing position number.

11. The method according to any one of claims 1 to 10, further comprising:
switching an automatic gluing mode to a manual gluing mode in response to the user instruction received through the human-machine interface; or
switching the manual gluing mode to the automatic gluing mode in response to the user instruction received through the human-machine interface,
wherein the gluing operation is performed on the workpiece in the manual gluing mode based on the gluing solution designated by the user through the human-machine interface.

12. A gluing system, comprising:
a control device at a gluing workstation for controllinga gluing operation, and
a gluing robot for performing the gluing operation;
wherein the control device at the gluing workstation is configured to:
invoke a gluing solution for the to-be-glued workpiece; and
instruct the gluing robot to perform the gluing operation on the workpiece based on the gluing solution.

13. The gluing system according to claim 12, further comprising:
a conveying apparatus;
wherein the conveying apparatus comprises:
a workpiece supporting component, configured to support the workpiece and fix the workpiece onto the workpiece supporting component; and
a movement component, configured to move the workpiece supporting component.

14. The gluing system according to claim 13, further comprising:
a positioning apparatus, configured to fix the workpiece into a position by fixing the workpiece supporting component at the gluing workstation into a position.

15. The gluing system according to claim 14, wherein the positioning apparatus comprises:
a clamping cylinder for clamping the workpiece supporting component in a horizontal direction;
a lifting cylinder for lifting the workpiece supporting component; and
a positioning bolt for inserting into a corresponding recess in the workpiece supporting component.

16. The gluing system according to any one of claims 13 to 15, further comprising:
a camera system, wherein the camera system is configured to capture an image of the workpiece, identify a length, width and height of the workpiece based on the image, and determine a model of the workpiece.

17. The gluing system according to any one of claims 13 to 15, further comprising:
a camera system, wherein the camera system is configured to capture an image of the workpiece, identify a position of a predetermined portion of the workpiece based on the image, and hence determine the position of the workpiece.

18. The gluing system according to claim 17, wherein
the camera system is configured to calculate an offset of the position of the workpiece relative to the preset position by inspecting the predetermined portion of the workpiece.

19. The gluing system according to claim 18, wherein
the predetermined portion comprises one or more of four corner portions of the workpiece; and
the offset of the position of the workpiece relative to the preset position comprises at least one of the following: an offset of the position of the workpiece relative to the preset value in a direction of a workpiece movement track, an offset of the position of the workpiece relative to the preset value in a direction perpendicular to the workpiece movement track, and an offset of a steering angle between the workpiece and the direction of the workpiece movement track relative to the preset value.

20. The gluing system according to any one of claims 12 to 19, further comprising:
a device manufacturing execution system server communicatively connected with the control device at the gluing workstation;
a conveying apparatus server communicatively connected with the control device at the gluing workstation and the conveying apparatus; and
a factory-level manufacturing execution system server communicatively connected with the device manufacturing execution system server.

21. The gluing system according to claim 20, wherein
the conveying apparatus is communicatively connected with the conveying apparatus server;
the conveying apparatus server is communicatively connected with the control device at the gluing workstation;
the conveying apparatus server is configured to forward, to the control device at the gluing workstation, a request, received from the conveying apparatus, for moving to the gluing workstation; and
the control device at the gluing workstation is configured to determine, in response to the request received from the conveying apparatus, whether to allow the conveying apparatus to move to the gluing workstation.
